# EUROPEAN PATENT APPLICATION

(11) **EP 2 626 784 A1**
(43) Date of publication of application: **14.08.2013**
(21) Application number: 12000859.4
(22) Date of filing: 09.02.2012
(51) Int. Cl.: G06F 9/44, G06F 9/54, G06F 11/36

(54) **Method and apparatus for automated MATLAB interfacing**

(71) Applicant: MIMOON GmbH, 47057 Duisburg (DE)
(72) Inventor: Isa, Kenan Nevzat, 47057 Duisburg (DE); Wesseling, Matthias, 46286 Dorsten (DE)
(74) Representative: Eisenführ, Speiser & Partner

(57) **Abstract**

The present invention relates to a method and apparatus for porting a module of a programming language with a predetermined interface definition to a Matlab environment, wherein the predetermined interface definition in the module is parsed and input/output interfaces of the module are determined based on the parsing result. The determined input/output interfaces are used to generate a first source code for input and output type conversions between the programming language and the Matlab environment. Then, based on the determined input and output interfaces a second source code is generated for a wrapper function source file (12) that is compiled and linked together with module source files (14) to produce a ported Matlab executable module. Based on the input and output interfaces a third source code of a second level wrapper source file may be generated for adapting the ported executable module interface to the predetermined module interface.

## Description

### FIELD OF THE INVENTION

The present invention relates to a method, apparatus and computer program product for interfacing between Matlab programming language and other programming languages, e.g., C or C++ language.

### BACKGROUND OF THE INVENTION

Matlab (matrix laboratory) is a numerical computing environment and fourth-generation programming language. Developed by MathWorks, Matlab allows matrix manipulations, plotting of functions and data, implementation of algorithms which may be expressed as a finite list of well-defined instructions, creation of user interfaces (i.e. points of interaction), and interfacing with programs written in other languages, including C, C++, Java, and Fortran. A module may be a more complex functional element consisting of other modules and kernels. The module has specified functionality and clearly defined input and output parameters which can contain data and control specific information used by the module. The module can as well refer to a kernel which is a basic entity in a modular system with specified functionality and clearly defined input and output parameters.

The development of signal processing algorithms is usually more efficient with higher level languages like Matlab. Matlab can integrate external routines written in C, C++, FORTRAN, and Java with Matlab applications, providing an interactive programming environment that can work in conjunction with C/C++ modules provided external to Matlab, including those provided by third party providers. Matlab brings the possibility to effectively implement the algorithm by writing less code with support of matrix operations syntax, extensive set of 1libraries/toolboxes, and highly efficient complex data types without need to consider memory allocations and declarations of variables (i.e. memory locations for storing structured data).

It is usually the case that final products are not in Matlab language supported by the Matlab interpreter, but in languages like C and C++, due to high speed and portability requirements. Hence, users or developers often have a source code in native C and C++ language for modeling the system behavior of their products. The source code is a text written using the format and syntax of a programming language. As a result of this, there may be exceeding amounts of C/C++ source code already available when new features have to be added or additional system level simulations are needed.

Ignoring the existence of higher level languages like Matlab is one of the options, but may result in inefficiency, and hence is an unnecessary effort. On the other hand, using Matlab with the existing C/C++ code brings a need to create Matlab wrapper functions for the existing C/C++ modules, so that these can be reused in Matlab scripts or for calling Matlab functions from inside C/C++ programs. The Matlab wrapper functions on the other hand can be quite complex for modules with complex interfaces. A wrapper function is a function in a computer program whose main purpose is to call a second function with little or no additional computation. It can be used to adapt the interface of an existing module, class, or object.

Usually the existing C/C++ modules have verification programs written also in C/C++ for testing that the module is functional. One problem with automatic Matlab wrapping of existing C/C++ module is that, even though the initial C/C++ module is tested with existing verification program, the created Matlab executable (MEX) module is not tested anymore. There is no test program to test the ported MEX module functionality. Hence, there is a risk that the ported MEX module is not functionally equivalent to the initial C/C++ module.

A simplified wrapper and interface generator (SWIG) has been released in 1996 as an open source software development tool that generates a glue code to connect programs written in native C/C++ language with a variety of high-level programming languages. An automatically generated SWIG glue code is a shared library used by an interpreter or linked to programs in target language. The glue code does not contribute any functionality towards meeting the program's requirements, but instead serves solely to "glue together" different parts of code that would not otherwise be compatible. SWIG is used with target languages like Perl, PHP, Python, Tcl, Ruby, and Octave - the current version of SWIG does not support Matlab. The disadvantage of SWIG is that developers have to write an interface description file containing a list of C/C++ functions to be visible to the high-level program interpreter. Another disadvantage of SWIG is that it generates interface adaptation code for functions with simple arguments which are input or output parameters of the functions. The conversion code for arguments with complex structured data types has to be written by the programmer. Additionally, SWIG cannot be used for calling interpreted functions by native code. This has to be done manually by the programmers. SWIG, also, does not provide a method to reuse the available C/C++ module tests for verification of the ported modules. Hence, it is not straightforward to apply this tool to existing modular systems with complex interfaces and there are high source code porting costs for creating the ported modules and the module tests for these. Porting is to be understood as the process of adapting software, so that an executable program can be created for a computing environment that is different from the one for which the software was originally designed.

Automated generation of source code for interfacing is an efficient approach for software development and there are some patents written on the topic. The US 7,502,031 B1 discloses an automated component interface creator tool which automatically generates component interfaces based on the information gathered by a parsing mechanism. The interface is created for hardware or software components. This tool focuses on hardware devices like image acquisition or embedded devices. It does not consider or target software module interfaces and there is no consideration done for automatically porting of available module tests. Additionally, the US 2010/0161678 A1 discloses a method for providing Matlab functionality in a Java-enabled environment. There are as well several Matlab interfacing approaches. However, all conventional Matlab interfacing approaches purely rely on programmer's effort for interfacing.

### SUMMARY OF THE INVENTION

It is an object of the present invention to provide a Matlab interfacing solution with reduced programming effort. This object is achieved by a method as claimed in claims 1 and 2, an apparatus as claimed in claims 9 and 10, and a computer program product as claimed in claim 11.

Accordingly, a predetermined interface definition of a module is parsed and input and output interfaces of the module are determined based on the parsing result. The predetermined interface definition may be provided in a header file of the module. Prior to the parsing, the header file may be preprocessed, for e.g. with GNU compiler - "gcc" with parameter "-E", to extend the interface definition. In a specific implementation, the parsing may comprise extracting a preprocessed header structure into a complex Python data structure used for source code generation. Additionally, an error notification or warning may be generated if the parsing leads to the result that the predetermined interface definition does not meet predefined interface guidelines. Based on the determined input and output interfaces a first source code for input and output type conversions between the programming language and the Matlab environment is generated. Then, based on the determined input and output interfaces a second source code is generated corresponding to a first level wrapper function source file that is compiled and linked together with the first source code and the sources of the corresponding module using C/C++ compiler and linker to produce a ported Matlab executable (MEX) module. Thereby, automatic porting of C/C++ modules or other programming language modules to Matlab environment can be achieved without any programming effort.

As a further option, a third source code can be generated corresponding to a second level wrapper function source file that uses a Matlab engine to execute the ported Matlab executable (MEX) module to provide the module interface for an existing C/C++ module verification program. In other words, it brings the possibility to replace the C/C++ module in the verification program with the ported MEX module using the second level wrapper. The module verification program is a program created for verification/testing of a module. Verification is the process of determining that a computer program and associated data accurately represents the developer's conceptual description and specifications. Automation of the verification process usually means having the module test programs and ability to run all these programs in regression mode to do system verification, usually by applying the input parameters and checking the output parameters. In a specific example, a Visual C project file may be generated, that contains C/C++ source files required to build the module verification program and the generated second level wrapper function source file. Hence, existing C/C++ module verification programs can be used for verification of ported MEX modules from within the Matlab engine (MEG).

The Matlab engine is a product developed by MathWorks and is used for calling Matlab scripts/functions from inside of a C/C++ program. Verified MEX modules can thus be created from existing C/C++ modules - all automatically. This automation eliminates the efforts required to write Matlab wrapper functions for C/C++ modules and Matlab test scripts for verification of the ported MEX modules. As a result of this automation, a tested Matlab toolbox, e.g. a set of Matlab functions that are developed to serve for a particular purpose, can be created without any programming effort out of existing modular C/C++ implementation. The created toolbox with the functionality of the existing C/C++ modules can then be used from Matlab scripts to extend the functionality, perform additional tests, or experiment within a Matlab or Simulink environment. Simulink is a commercial tool for modeling, simulating and analyzing multi-domain dynamic systems. Its primary interface is a graphical block diagramming tool and a customizable set of block libraries, thereby bringing the possibility to have the visual environment to work with the ported C/C++ modules.

The proposed interfacing solution allows using Matlab and C/C++ or other programming environments together without any additional effort for writing Matlab wrapper functions. All Matlab wrapper functions are automatically generated. This approach can be applied to improve any development environment that extensively and jointly uses C/C++ and Matlab. The proposed approach can be used to port automatically the existing C/C++ modules to Matlab executable (MEX) modules. Additionally, the module verification programs that exist for C/C++ modules can also be automatically ported and used for verification of the ported MEX modules.

Furthermore, the proposed solution provides the opportunity to integrate Matlab with C/C++ development environments without additional effort. Matlab brings the advantage with its extensive amount of toolboxes that can be used for fast proto-typing. Additionally, Matlab can perform data acquisition, analysis, application development, mathematical computing, technical programming, GUI development, and has data visualization capabilities. Hence, the strengths of both environments can be combined - the speed and clear structure of C with flexibility and powerful toolboxes of Matlab. The interfacing can be completely automated and the automated test porting removes all possibilities of interfacing errors. Without additional effort, ported MEX modules can be reused from within Matlab scripts, knowing that the ported MEX modules are verified with initial C/C++ module tests.

Additionally, the proposed solution allows creating a Matlab port of existing C/C++ modules automatically, and with a proposed second level wrapping gives the possibility to verify the ported MEX modules. This allows very fast porting of existing C/C++ modules to Matlab and with the automated verification it brings the confidence that the ported MEX modules are functionally compatible with the initial C/C++ modules.

Moreover, with the proposed solution there is no additional effort required when module interfaces have been changed. The interface files - usually corresponding to a header files in C/C++ - can be rescanned and from the gathered information about changed interfaces, updated wrapper functions regenerated.

The above features may be implemented as a software program or routine controlling a processor or computer device. As an example, the software program or routine may be implemented in Perl, Python or C type programming language.

Other advantageous modifications are defined in the dependent claims.

### BRIEF DESCRIPTION OF THE DRAWINGS

The invention will now be described in greater detail based on embodiments with reference to the accompanying drawings in which:
Fig. 1 shows a flow diagram of a source code generation procedure according to a first embodiment;
Fig. 2 shows a schematic block diagram of an verification system according to a second embodiment; and
Fig. 3 shows a schematic block diagram of a software-based implementation according to a third embodiment.

### DESCRIPTION OF THE EMBODIMENTS

In the following, embodiments of the present invention will be described based on a Matlab interfacing and verification system for C/C++ modules. However, it is noted that the present invention is not limited to C/C++ modules and can be used for various other programming languages with predetermined interface definitions.

Some programming languages - most notably C, C++, and Objective-C use header files. These files allow programmers to separate certain elements of a program's source code into reusable files. Header files commonly contain forward declarations of classes, subroutines, variables, and other identifiers. Programmers who wish to declare standardized identifiers in more than one source file can place such identifiers in a single header file, which other code can then include whenever the header contents are required. This is to keep the interface in the header separate from the implementation. The C standard library and C++ standard library traditionally declare their standard functions in header files.

A MEX wrapper function for existing C module can be automatically created if the interface of the C/C++ module is clearly defined. The C/C++ module interface can be figured out by scanning the header file containing the interface definition of the C/C++ module. Hence, there is no need to write an additional interface description file as in SWIG.

According to the first embodiment, the interface of the C/C++ module is scanned and parsed from the module header files. The C/C++ modules have a clear interface defined in their header files from where a parser script can parse all the input and output parameters and their types. The input and output parameters can have simple data types as well as more complex structured data types.

In computing, a parser is one of the components in an interpreter or compiler that checks for correct syntax and builds a data structure (often some kind of parse tree, abstract syntax tree or other hierarchical structure) implicit in the input tokens. The parser often uses a separate lexical analyzer to create tokens from the sequence of input characters. Parsers may be programmed by hand or may be (semi-)automatically generated (in some programming languages) by a tool. The important point for automatically parsing and extracting the interface of the C/C++ module is that the interface can be clearly defined with coding rules. It is also possible to verify that the C/C++ module interface is matching the specification during the scanning and parsing process. Errors or warnings can be generated by the parser if the interface does not fit to the interface guidelines also informing the user that the Matlab wrapper functions cannot be generated properly due to interfacing issues. Then, it is clear what the input and the output parameters of the C/C++ modules are. Thereby, Matlab to C/C++ (m2c) and C/C++ to Matlab (c2m) conversion/wrapper functions can be automatically generated considering the interface description of the C/C++ module. Additionally, the MEX wrapper function (e.g. "*void mexFunction(...)*") can be automatically generated.

The MEX wrapper function reads all C/C++ module input parameters from Matlab environment, calls the related m2c functions to convert the Matlab data types to corresponding C/C++ data types and provides these as input parameters to the C/C++ module. Here, input parameters are inputs to the C/C++ module and can contain data and control specific information used as read only by the module. Afterwards, the MEX wrapper executes the C/C++ module and at the end converts the output parameters of the C/C++ module back to corresponding Matlab data types using the corresponding c2m functions.

The m2c functions can be generated in a way that they contain safety checks to ensure that the Matlab data types provided as an input to m2c do fit to the corresponding C/C++ data types and error can be reported to the MEX module user in case there is a mismatch that cannot be handled by the m2c conversion function. Similarly, c2m conversion functions can have safety checks that can check and afterwards convert the C/C++ data types to the corresponding Matlab data types.

As a next step, the automatically generated MEX wrapper function and the C/C++ source files of the module can be compiled and linked together using C/C++ compiler and linker. After this, the ported MEX module will be available for execution from Matlab. The ported MEX module has the input and output parameters of Matlab type corresponding to the original C/C++ module and can be called from Matlab scripts or Matlab command prompt. At this point the MEX module is not tested.

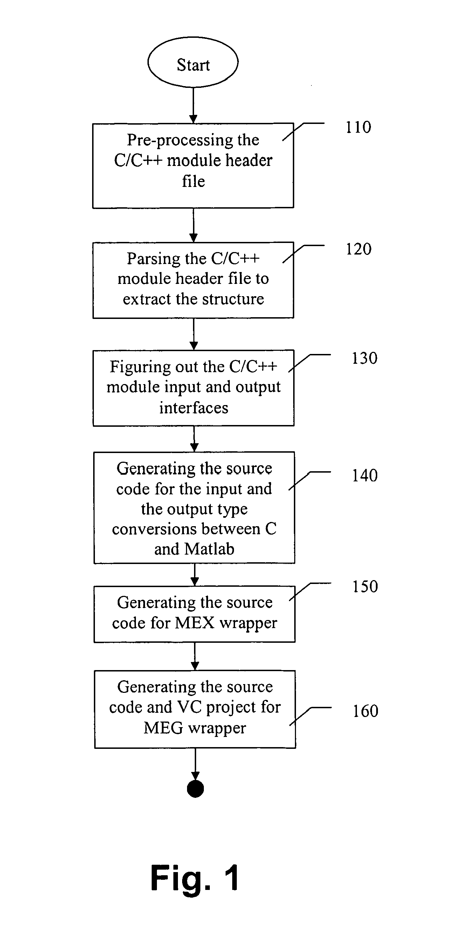

Fig. 1 shows a flow diagram of a code generation procedure for Matlab interfacing according to the first embodiment. Source code generation is the process of converting the intermediate representation of description into a source code. If the C/C++ module is written according to the interface guidelines, the following steps are used to generate the source codes for MEX and MEG wrapper functions.

In step S110, the header file of a target C module is preprocessed, e.g. with a GNU Compiler Collection (GCC) such as "gcc" executed with parameter "-E", for extending with the included enum(s) and/or structure(s) and the macros. GCC is a compiler system produced by the GNU Project supporting various programming languages. "GNU" is a recursive acronym that stands for "GNU's Not Unix". GCC is a key component of the GNU tool chain. This step may include an additional preprocessing step for replacing "typedef struct" with classes - required by the parser used in the next step S120. A "struct" in C programming language is a structured (record) type that aggregates a fixed set of labeled objects, possibly of different types, into a single object. A "struct" declaration consists of a list of fields, each of which can have any type. The total storage required for a "struct" object is the sum of the storage requirements of all the fields, plus any internal padding.

In following step S120 the preprocessed header structures are extracted by a parser, e.g. the Python "CppHeaderParser" into a complex data structure used during source code generation, e.g., the data structure of the Python programming language. The Python package "CppHeaderParser" is adapted to parse C++ header files and generate a data structure representing the class.

Then, in step S130, the structure and enum's used in the target C module input and output interfaces are figured out. An enum type is a type whose fields consist of a fixed set of constants. Common examples include compass directions (values of NORTH, SOUTH, EAST, and WEST) and the days of the week.

In the next step S140, the Matlab to C (m2c) and C to Matlab (c2m) conversion functions for (i) single element types ("<type name>_m2c", "<type name>_c2m"), and (ii) for multi-dimensional array types ("<type name>_vec_m2c", "<type name>_vec_c2m") are generated and stored e.g. in the "<module name>_mif.h" file. It is to be noted that there are different source code generator functions for structures and enum's.

Thereafter, in step S150, the MEX wrapper function source file is generated and stored, e.g. in the "<module name>_mif.c" file. The MEX wrapper and the C module source files can afterwards be compiled and linked with C/C++ compiler and linker. This step produces the ported MEX module, stored e.g. in the "<module name>_mif.mex" file that can be executed from Matlab.

Finally, in the last step S160, a Matlab engine (MEG) wrapper source file is generated and stored, e.g. into the "<module name>_meg.c" file. This second level wrapper uses the Matlab engine to execute the ported MEX module, e.g. called "<module name>_mif.mex", and provides the C module interface that can be used with the module verification program. In the present first embodiment, the module verification program source file is called "main.c". Furthermore, "<module name>_meg.c" and "<module name>_mif.mex" files can be used instead of the source files corresponding to the C module allowing the verification of the ported MEX module.

Additionally, the Visual C (VC) project file "<module name>_meg.vcproj" can be automatically generated in step S160. The VC project file contains all source files required to build a module verification program using the second level wrapper "<module name>_meg.c" that uses the Matlab Engine library to call the ported MEX module "<module name>_mif.mex". The produced executable can then be used to verify the ported MEX module.

Interface guidelines are rules for valid specification of a module interface. The valid specification shall follow the interface guidelines. Interface guidelines define how the module input and output parameters, and methods of the modules shall be specified. Those methods correspond to a set of functions provided by the module library (i.e. a set of data structures and functions corresponding to the module implementation) and used to perform specific tasks using the module. The module interface guidelines provide a common look for all module interfaces in the project, makes the code more readable, and easier to use. Exemplary interface guidelines for C modules are presented below, but it is straightforward to extend and use it for C++ modules or to use the proposed concept with different C/C++ interface guidelines. In case of C++, the modules can correspond to classes or objects.

In the following text, exemplary interface guidelines according to the present embodiments are presented:
1. Every C/C++ module shall have one header file: "<module name>.h"
2. This header file "<module name>.h" shall have the following typedef struct's:
   a. "<module name>_Outputs_s" - a structure that contains output memory with two types of variable declarations
      i. "<all output parameters>" - also corresponding to MEX module outputs.
      ii. The names of non-output variables for MEX module shall start with underscore.
   b. "<module name>" - a structure that contains all module related data/state and shall contain a pointer (i.e. a variable that keeps an address of another variable) to the output memory.
      i. "<module name>_Output_s *outputMemory;"
      ii. Other module related data/state.
3. "<module name>.h" shall declare the following functions:
   a. "void <module name>_init(<module name> *ths, <module name>_Scratch_s *scratchMem, <module name>_Output_s *outputMem)" - corresponding to the module initialization function. The scratch memory is a memory used temporarily by the module for storing intermediate data buffers.
   b. "void <module name>_config(<modute name> *ths, <all input parameters>);" - corresponding to the module configuration function. All input parameters to the module shall be passed using this function. The inputs correspond to MEX module inputs as well.
   c. "void <module name>_processData(<module name> *ths);" - the main function of the module that contains all the functionality.

There can be more than a single element in any of the input or output parameters. This data type can correspond to a vector or multi-dimensional array. In this case, the following interface guidelines have been defined:
1. Static Vector Type. For e.g. a static vector with 10 elements would be
   a. "<type name> <vector name>[10];"
2. Dynamic Vector Type has a size specified as separate variable.
   a. "<type name> *<vector name>;" - Pointer containing the address for the vector.
   b. "int <vector name>Len;" - Additional variable providing the number of the elements.
3. Static Multi-dimensional Type
   a. "<type name> <multi-dimensional array name>[2][10]...;"
4. Dynamic Multi-dimensional Array - each dimension has a separate variable.
   a. "<type name> *<multi-dimensional array name>;"
   b. "int <multi-dimensional array name>Dim1;" - size of the first dimension
   c. "int <multi-dimensional array name>Dim2;" - size of the second dimension

There are data types with predefined basic m2c and c2m conversion functions - in "mif.h" source file - specified and known by "mifGen.py". For this e.g. application the complete code generation algorithm described in Fig.1 has been implemented as a Python script named "mifGen.py" corresponding to Matlab Interface source code generator.

For e.g. predefined basic data types in "mif.h" can be:
i. "sint32" - signed long integer variable type with 32-bits
ii. "uint32" - unsigned long integer variable type with 32-bits
iii. "sint16" - signed short integer variable type with 16-bits
iv. "uint16" - unsigned short integer variable type with 16-bits
v. "sint8" - signed very short integer variable with 8-bits only
vi. "uint8" - unsigned very short integer variable with 8-bits only
vii. "bitVector" - bit vector variable type that encapsulates the pointer to the bit-vector array and the variable containing the number of bits in the vector.
viii. "fp8vector" - fixed point vector type that encapsulates the pointer to the fixed point vector, the variable containing the number of fixed point values in the vector, and the fixed point location in the vector.
ix. and other custom variable types that are frequently used.

Additionally there may be a conversion table in "mifGen.py" Matlab interface source code generator that is used for converting the possible alternative names used for the basic C types to predefined basic data types. E.g.:
1. "int" will be converted to "sint32"
2. "long" will be converted to "sint32"
3. "unsigned char" will be converted to "uint8"
etc.

After having the input and output parameters analyzed, the m2c and c2m conversion functions are generated and stored in the "<module name>_mif.h" file for each data type involved in input and output parameters that do not belong to the predefined basic data types. The predefined basic data types do not need generated source code and they have m2c and c2m conversion functions defined and implemented in the "mif.h" header file which is included in the "<module name>_mif.h" file.

For each predefined basic data type there may be 6 functions defined in "mif.h" for handling m2c and c2m conversions:
1. "void <type name>_m2c(const mxArray *input, int index, <type name> *output, int allocateOutput);" - function for conversion from Matlab to C.
2. "void <type name>_c2m(<type name> *input, mxArray **output, int index);" - function for conversion from C to Matlab.
3. "void <type name>_free(<type name> *input);" - function for deallocating the memory allocated for the C variable.
4. "void <type name> vec_m2c(const mxArray *input, <type name> **output, int *nDim, int *dim, int allocateOuter, int allocatelnner);" - function for conversion of multi-dimensional array from Matlab to C. The parameters "nDim" and "dim" are the number of dimensions and number of elements in each dimension, respectively.
5. "void <type name>_vec_c2m(<type name> *input, int nDim, int *dim, mxArray **output);" - function for conversion of multi-dimensional array from C to Matlab. The parameters "nDim" and "dim" are the number of dimensions and number of elements in each dimension, respectively.
6. "void <type name>_vec_free(<type name> *input, int nDim, int *dim);" - function for deallocating the memory allocated for the multi-dimensional C variable.

The m2c and c2m functions may be used for single element data conversion and the vec_m2c and vec_c2m functions may be used for vectors and multi-dimensional array data conversion. The free function may be used to free the dynamically allocated memory for the single element and the vec_free function may be used to free the dynamically allocated memory for the multi-dimensional array.

It is noted that the same 6 functions may be generated by the "mifGen.py" source code generator for complex data types involved in the input or output parameters of the MEX module - these are stored in automatically generated "<module name>_mif.h" file.

If the input parameters for any module are too many or if not all of the input parameters require modification during consecutive calls, the input parameters can be organized into structures and the structure can be passed as input parameter to the module. The caller can keep the copy of the structure used as input parameter and modify only the required parameters in the structure before passing the structure as input parameter to the module.

If the module needs a static data, this is possible, since Matlab MEX technology allows having static data inside MEX modules. The static data is getting lost only when a "clear <MEX module name>" command is executed from Matlab script or prompt. Hence, it is possible to call MEX modules to process the input data using the static data and to produce output. All this can be automated with the proposed embodiments.

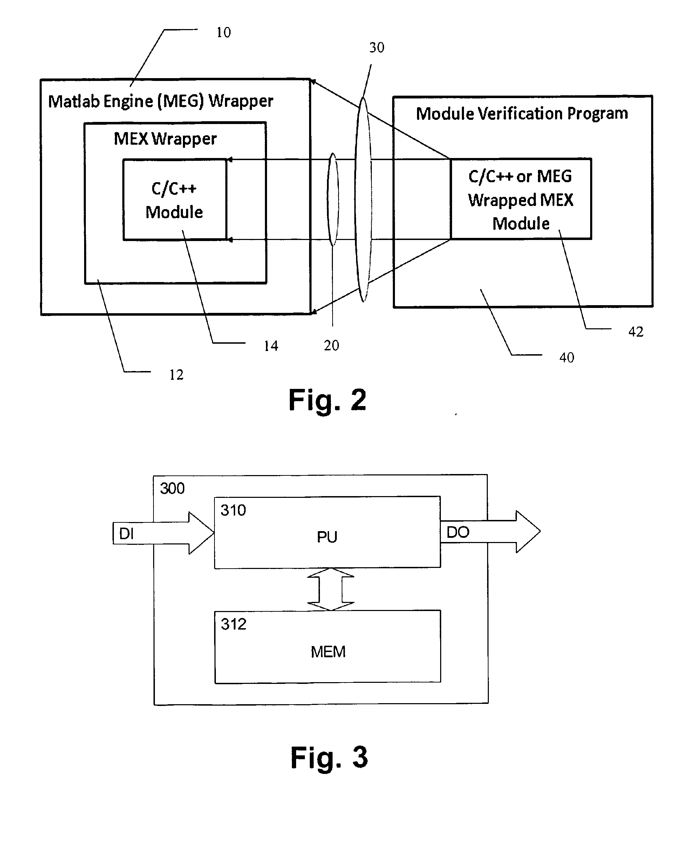

Fig. 2 shows a schematic block diagram of a verification system according to a second embodiment, where the ported MEX modules are tested and verified. It is assumed that there is a C/C++ modular implementation available with a set of C/C++ modules and that each module has its own verification program. The module verification program 40 will apply the input parameters to the C/C++ module 14, execute the C/C++ module, get the output parameters and compare these with predefined or dynamically generated output test vectors. It the outputs of the C/C++ module are matching the output test vectors the module verification program 40 reports that the C/C++ module 14 has passed the test. Using the definition header files describing the C/C++ module interface 20, the scanner and the parser collects the information about the input and the output parameters of the C/C++ module 14. This information is used to automatically create the MEX wrapper functions 12 that are compiled and linked together with the C/C++ module 14 source codes to obtain the ported MEX module - 12 and 14 linked together. The ported MEX module interface has been bounded by MEX Wrapper box 12. The ported MEX module (12 and 14 linked together) has the input and output parameters as Matlab types.

Moreover, a second level wrapper function can be created, which may be called Matlab Engine (MEG) wrapper 10, that converts the C/C++ module inputs to Matlab data types using c2m functions then calls the ported MEX module (12 and 14 linked together) using Matlab Engine from inside C/C++ and at the end gets the ported MEX module outputs from Matlab environment and convert these to the C/C++ module output data types using m2c functions. After second level wrapper function called MEG Wrapper 10, the interface 30 of the two times wrapped C/C++ module will be the same as the unwrapped initial C/C++ module interface 20. Hence, it is possible to use the MEG wrapped ported MEX module - 10, 12, and 14 together - instead of the original C/C++ module 14 in the module verification program 40 that tests the module 42 which can be either 14 or 10, 12, and 14 together. This allows the initially available module verification program 40 written for the C/C++ module 14 to be reused without any modification for verification of the ported MEX module shown as 12 and 14 linked together. The proposed second level wrapper function 10 allows the verification of the ported MEX module to be done without any programming effort. Otherwise, the ported MEX module requires a separate Matlab based test program for verification.

Fig. 3 shows a schematic block diagram of an alternative software-based implementation according to another embodiment. The required functionalities can be implemented in a computer device 300 with a processing unit 310, which may be any processor or computer device with a control unit which performs control based on software routines of a control program stored in a memory 312. The control program may also be stored separately on a computer-readable medium. Program code instructions are fetched from the memory 312 and are loaded to the control unit of the processing unit 310 in order to perform the processing steps of Fig. 1, which may be implemented as the above mentioned software routines. The processing steps may be performed on the basis of input data DI and may generate output data DO. In the present interfacing system, the input data DI may correspond to at least one C/C++ module (or a module of another suitable programming language), and the output data DO may correspond to a ported or wrapped MEX module for the Matlab environment.

Consequently, the functionalities of the above embodiments may be implemented as a computer program product comprising code means for generating each individual step of the porting procedure when run on a computer device or data processor.

The proposed embodiments reduce development effort by providing a solution for using the advantages of joint C/C++ and Matlab development environments without the drawback of interfacing effort. For e.g. a wrapper for a user equipment (UE) receiver module of a Long Term Evolution (LTE) Release 8 mobile communication system contains approximately 10,000 lines of code (LOC) - all automatically generated by the proposed embodiments.

Furthermore, the proposed solution may also be used to create C/C++ module interface for an existing Matlab script. This can be achieved by taking the automatically generated second level wrapper function and from inside this function instead of calling the ported MEX module to call the Matlab script. This gives the possibility to use the concept to interface Matlab functions to the existing C/C++ system without an additional effort required for writing the C to Matlab (c2m) and Matlab to C (m2c) wrapper functions.

Additionally, the proposed solution may also be used extract the interface related documentation from the interface file (header file) and generate a description for ported MEX modules. This description can be accessed as help from Matlab command prompt. The interface related documentation can be taken from the source code comments written in a structured way for e.g. like Doxygen. Doxygen types of comments are also supported by CppHeaderParser used by a Matlab interface generator tool ("mifGen.py").

Complex systems may be implemented using a modular design with clearly defined interfaces between the modules. The modules have a clearly defined input and output parameters and functionality. The verification of complex systems can be done by writing module test programs and automation that will run all module tests to verify the functionality of the complete system - regression test. Without such a design it is difficult to ensure that the functionality of the system is correct after any source code modification. Assuming that the modular design is in place with all the module test programs written in C/C++, by using the proposed embodiments the C/C++ modules can be effortlessly ported to MEX modules, and the existing C/C++ module test programs can be reused for verification of the ported MEX modules. This allows a fast porting of C/C++ modules to Matlab and has a broad range of applications including Matlab toolbox creation, using C/C++ and Matlab integrated development environments jointly for development of algorithms, and reducing the development costs. S-files can be created as well for interfacing the ported MEX modules with Simulink to allow an additional visualization, so that the available C/C++ modules can be easily reused from Matlab/Simulink environment for testing or for further extending the source code functionality.

Thus, the proposed embodiments do not require any programmer effort to maintain Matlab wrapper functions. The changes in C/C++ module input and output parameters or parameter types (e.g. data type or structures) are inevitable if the complex system is in active development stage. In this case the Matlab wrapper functions have to be maintained and changed according to the changes in the C/C++ module interfaces. This effort can be considerable and usually under the pressure of active development stage the Matlab wrappers can become obsolete and with time the initially available Matlab port can become a big workload that is impossible to maintain. Hence, the power of Matlab environment gets lost during the active development stage. Creating an automatic Matlab wrapper generator solves half of the problem, since in this case there is no insurance that automatically generated Matlab wrapper functions correctly interact with C/C++ modules and that we have correctly ported MEX modules. All these problems have been solved with the proposed solution according to the above embodiments which automatically generate the Matlab wrapper functions, and a second level wrapper to wrap the ported MEX module Matlab interface back into native C/C++ interface and by using Matlab engine, calls ported MEX module from C/C++ module test. Hence, the initially available C/C++ module tests can be reused to verify the ported MEX modules. Since all these wrappers are automatically generated there is no additional cost and effort needed to maintain up-to-date Matlab wrappers and with second level wrappers it is straightforward to ensure that ported MEX modules are correct. All this provides the possibility for the programmer to use the ported MEX modules from Matlab scripts during the development stage without additional effort for interfacing with Matlab.

The concepts of the above embodiments have been used and tested by creating a software development tool called Matlab interface generator ("mifGen.py") which has been successively used with LTE Release 8 and 9 reference chains. All Matlab to C/C++ interfacing has been automated, leaving more time for the developer to focus on the algorithms and implementation instead of spending time writing glue code for interfacing C with Matlab. A glue code is a code that does not contribute any functionality towards meeting the program's requirements, but instead serves solely to "glue together" different parts of code that would not otherwise be compatible.

In summary, a method and apparatus for porting a module of a programming language with a predetermined interface definition to a Matlab environment has been described, wherein the predetermined interface definition in the module is parsed and input and output interfaces of the module are determined based on the parsing result. Based on the determined input and output interfaces a first source code for input and output type conversions between the programming language and the Matlab environment is generated. Then, based on the determined input and output interfaces a second source code is generated for a wrapper function source file that is compiled and linked together with C/C++ module sources by C/C++ compiler and linker to produce a ported Matlab executable module. Finally, based on the determined input and output interfaces the third source code is generated that wraps the ported MEX module back to the C/C++ module interface using the Matlab engine, providing the possibility to reuse existing C/C++ module tests for verification of the ported MEX modules.

It is apparent that the invention can easily be extended to any software environment which may include a collection of hardware and software technologies where some or all of the operating functions are implemented through modifiable software or firmware operating on programmable processing technologies. Such devices include field programmable gate arrays (FPGAs), DSPs, general purpose processors (GPPs), programmable System on Chip (SoC) or other application specific programmable processors. The use of these technologies allows new wireless features and capabilities to be added to existing radio systems without requiring new hardware. Moreover, any kind of module of various programming languages with predetermined interface definition, not necessarily a module of a wireless communication system, can be ported by the proposed solution to a Matlab environment. The embodiments may thus vary within the scope of the attached claims.

## Claims

1. A method of automatic porting of a module of a programming language with a predetermined interface definition to a Matlab environment, said method comprising:
a) parsing (S120) said predetermined interface definition of said module;
b) determining (S130) input and output interfaces of said module based on the parsing result;
c) generating (S140) based on said input and output interfaces a first source code for input and output type conversions between said programming language and said Matlab environment; and
d) generating (S150) based on said input and output interfaces a second source code for a wrapper function source file that is compiled and linked by a Matlab interpreter to produce a ported Matlab executable module.

2. The method according to claim 1, further comprising generating (S160) based on said input and output interfaces a third source code of a second level wrapper source file for adapting the ported Matlab executable module interface to the predetermined module interface compatible with the module verification program.

3. The method according to claim 2, further comprising generating a Visual C project file or any other type of project file for building said ported Matlab executable module test/verification program (S160) that uses said second level wrapper function source file and reuses said module verification program source files.

4. The method according to any of the preceding claims, wherein said predetermined interface definition is provided in a header file of said module.

5. The method according to claim 4, wherein said module is implemented in a C or C++ programming language.

6. The method according to claim 4 or 5, further comprising preprocessing said header files to extend said interface definition.

7. The method according to claim 6, wherein said parsing comprises extracting a preprocessed header structure into a complex Python data structure used for source code generation.

8. The method according to any one of the preceding claims, further comprising generating an error notification or warning if said parsing leads to the result that said predetermined interface definition does not meet predefined interface guidelines.

9. An apparatus for automatic porting of a module of a programming language with a predetermined interface definition to a Matlab environment, said apparatus comprising:
a) a parser (S120) for parsing said predetermined interface definition in said module;
b) an interface detector (S130) for determining input and output interfaces of said module based on the parsing result;
c) a first source code generator (S140) for generating based on said input and output interfaces a first source code for input and output type conversions between said programming language and said Matlab environment; and
d) a second source code generator (S150) for generating based on said input and output interfaces a second source code of a wrapper function source file (12) that is compiled and linked by a C/C++ compiler and linker together with the C/C++ module source files (14) to produce said ported Matlab executable module.

10. An apparatus according to claim 9, further comprising a third source code generator (S160) for generating a third source code for a second level wrapper function source file (10) adapted to use a Matlab engine to execute said ported Matlab executable module and to provide a module interface (30) for a module verification program.

11. A computer program product comprising code means for producing the steps of any one of claims 1 to 8 when run on a computing device (300).
